# EUROPÄISCHE PATENTSCHRIFT

(11) **EP 1 102 969 B1**
(45) Veröffentlichungstag und Bekanntmachung des Hinweises auf die Patenterteilung: **07.05.2003**
(21) Anmeldenummer: 99930980.0
(22) Anmeldetag: 26.07.1999
(51) Int. Cl.: G01F 11/08, G01F 11/26, G01F 11/28, B65D 47/00

(54) **DOSIER- UND MESSVORRICHTUNG FÜR FLIESSFÄHIGE MEDIEN**
DOSING AND MEASURING DEVICE FOR FLOWING MEDIA
DISPOSITIF DE DOSAGE ET DE MESURE POUR MILIEUX COULANTS

(30) Priorität: 03.08.1998 CH 162198
(43) Veröffentlichungstag der Anmeldung: 30.05.2001
(73) Patentinhaber: Createchnic AG, 8309 Nürensdorf (CH)
(72) Erfinder: LOERTSCHER, Ulrich, CH-8006 Zürich (CH)
(74) Vertreter: Patentanwälte Feldmann & Partner AG
(86) Internationale Anmeldenummer: CH9900346
(87) Internationale Veröffentlichungsnummer: WO00008425

(56) Entgegenhaltungen:
- US-A- 4 105 142
- US-A- 5 031 802
- US-A- 5 292 039

## Beschreibung

Die Erfindung betrifft eine Vorrichtung an einem festen oder deformierbaren Behälter mit Behälterhals, zur Dosierung und Abgabe einer variablen, messbaren Menge eines fliess-, riesel- oder schüttfähigen Mediums gemäss Oberbegriff des Patentanspruches 1.

Behälter, an denen solche Vorrichtungen angebracht sind, werden mit dem Behälterhals nach unten verwendet und wobei durch Handdruck auf die Vorrichtung das Medium im Behälter in eine Messkammer fliessen kann, bis eine gewünschte Menge erreicht ist. Lässt man den Handdruck auf die Vorrichtung in Richtung zur Flasche hin weg, so wird der Fliessstrom gestoppt.

Bekannte Dosier- und Messvorrichtungen sind in verschiedensten Ausführungsformen bekannt. Dabei ist ihre Gestaltung im wesentlichen von der Art der Behälter abhängig, auf denen sie angebracht werden. Beispielsweise sind solche Vorrichtungen auf Flaschen für Spirituosen angebracht und sind nur geeignet, ganz bestimmte, immer gleiche Mengen zu dosieren. Andere Vorrichtungen, beispielsweise solche für Zahnreinigungsspüllösungen bedingen deformierbare Behälter, um die Flüssigkeit in eine Messkammer zu fördern, deren Rücklauf durch eine Art Siphon verunmöglicht wird. Wird die dosierte Menge nicht vollständig benutzt, so verbleibt die Restmenge in der Messkammer, deren Dichtigkeit nicht genügt, um ein Austrocknen der Restmenge zu vermeiden. Dies fuhrt nicht nur zu unhygienischen Zuständen, sondern es wird oftmals auch die Funktion beeinträchtigt oder gar verunmöglicht.

Vielfach sind auch Dosiervorrichtungen bekannt, die undicht oder nicht exakt sind. Letztlich sind aber auch Dosier- und Messvorrichtungen bekannt, die eher dem Laborbereich zuzuordnen sind und allein aus Kostengründen in dem hier interessierenden Consumerbereich nicht einsetzbar sind.

Bereits aus der US-A-4'105'142 ist eine Dosier- und Messvorrichtung bekannt, welche die Merkmale des Oberbegriffes des Patentanspruches 1 umfasst. Die Dichtung zwischen Messkammer und Druckbalg erfolgt hier mittels einer Abschlusswand an der Messkammer, in der eine Durchgangsöffnung angeordnet ist. Die Durchgangsöffnung wird geschlossen durch einen Ventilstift, der mit einer Halterung verbunden ist. Die Halterung ist zwischen den Hals des separaten Behälters und den gesondert gefertigten Druckbalg geklemmt. Sämtliche Teile, nämlich Behälter, Druckbalg und Messkammer sind einzeln gefertigte Teile, die miteinander verschraubbar sind.

Es ist folglich die Aufgabe der vorliegenden Erfindung, eine einfache, insbesondere auch kunststofftechnisch einfach herzustellende Lösung einer Dosier- und Messvorrichtung zu schaffen, bei der die zuvor aufgezeigten Nachteile vermieden werden.

Diese Aufgabe löst eine Dosier- und Messvorrichtung der eingangs genannten Art mit den kennzeichnenden Merkmalen des Patentanspruches 1. Bei dieser Lösung befindet sich zwischen einem Behälter und einer Messkammer ein Druckbalg mit Ventilsitz, welcher ein innenliegendes Ventil umschliesst. Weitere vorteilhafte Ausführungsformen des Erfindungsgegenstandes gehen aus den nachfolgenden Ansprüchen hervor, und dessen Bedeutung und Wirkungsweise kann der nachfolgenden Beschreibung entnommen werden. In der Zeichnung sind verschiedene vorteilhafte Ausgestaltungsformen des Erfindungsgegenstandes dargestellt und nachfolgend beschrieben.

Es zeigt:
- Figur 1: einen axialen Vertikalschnitt durch eine erfindungsgemässe Vorrichtung, bei der der Behälter integral mit dem Druckbalg und der Messkammer geformt ist.
- Figur 2: zeigt einen Teilschnitt durch dieselbe Lösung nach Figur 2, bei der jedoch der Druckbalg 3 ein unter vorgegebener Zuspannung sich schliessendes Element ist.

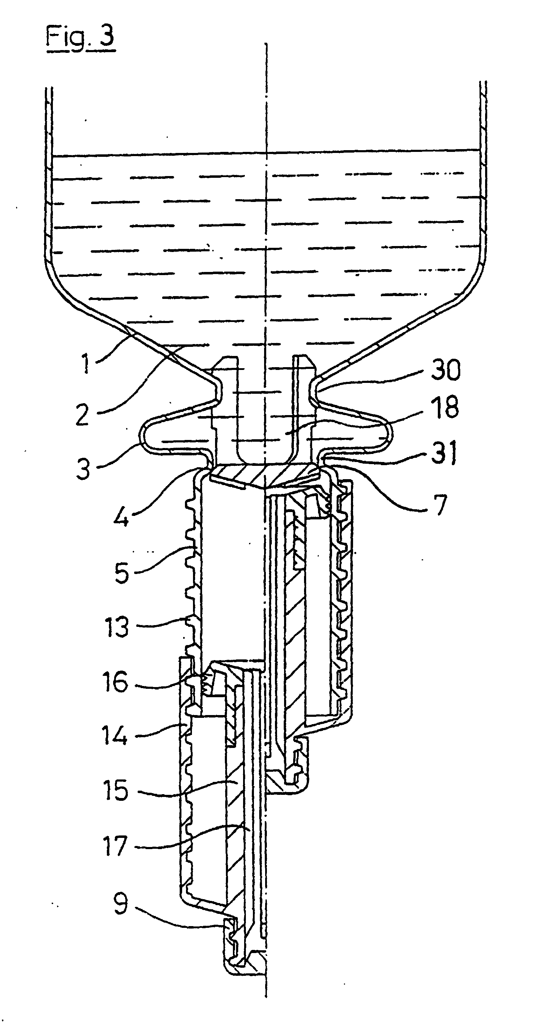

- Figur 3: zeigt eine Ausführung entsprechend der Variante nach Figur 1, wobei jedoch die Messkammer zweiteilig teleskopisch gestaltet ist.

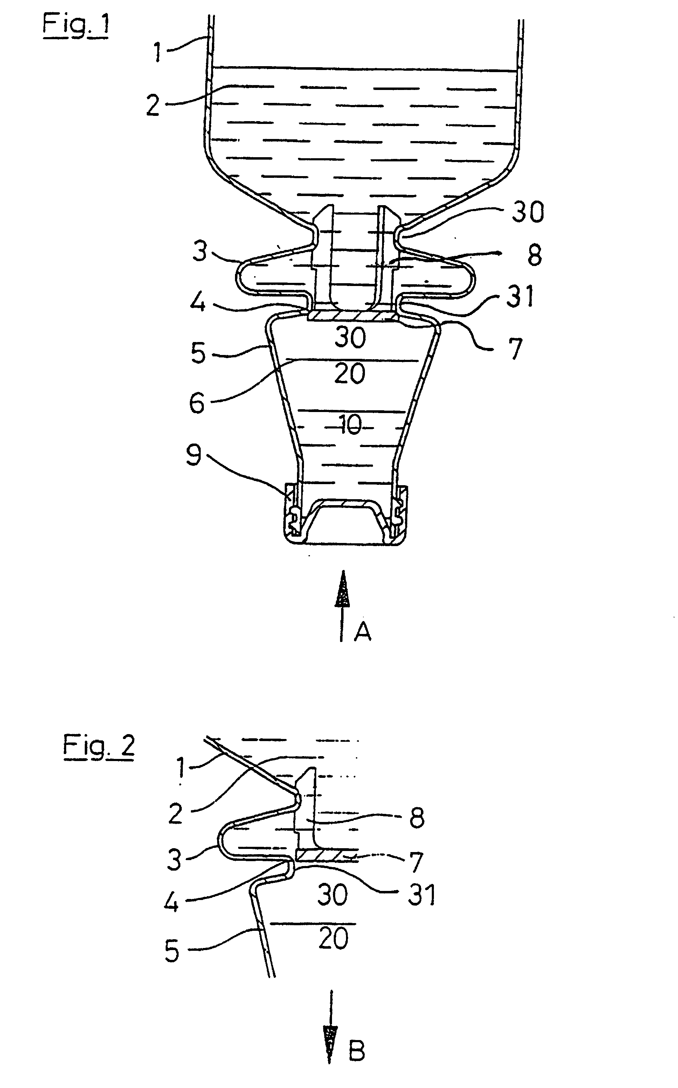

In der Figur 1 ist die erfindungsgemässe Dosier- und Messvorrichtung in der Arbeitslage, das heisst, dass das Behältnis auf dem Kopf steht, in einem Vertikalschnitt gezeigt. Der Behälter 1 kann praktisch in Form und Grösse beliebig gestaltet sein. Der Behälter kann auch aus einem beliebigen Material gefertigt sein. In der in der Figur 1 dargestellten Variante handelt es sich um einen Kunststoffbehälter 1, der mittels Blastechnik oder Spritzblastechnik gefertigt sein kann. Das Behältnis 1 bzw. der Behälter 1 ist hier teilweise mit einem fliess-, riesel- oder schüttfähigem Medium gefüllt. In Frage kommen beispielsweise konzentrierte Reinigungsmittel, die nachträglich verdünnt werden sollen, aber auch flüssige Düngemittel oder pharmazeutische Produkte, die nachträglich verdünnt werden können und so dosiert abgegeben werden. Im Gegensatz zu diversen anderen Dosier- und Messvorrichtungen muss das Behältnis lediglich während des Füllens der Messkammer auf den Kopf gehalten werden. Danach kann das Behältnis problemlos umgekehrt werden und der auf der Messkammer 5 befindliche Verschluss 9 geöffnet bzw. abgeschraubt werden, zur Abgabe der dosierten Menge fliessfähigen Mediums. Der Behälter 1 weist eine praktisch als Flaschenhals wirkende Einengung auf, welche einen Übergangsbereich 30 zwischen Behälter 1 und dem nachfolgenden Druckbalg 3 bildet. Der Druckbalg 3 kann ein oder mehrere Balgfalten aufweisen. In der Zeichnung ist eine Ausführung mit einer einzigen Balgfalte dargestellt. Am Ende des Balges in Ausströmrichtung besteht eine zweite Einschnürung 31, welche den Übergang vom Balg 3 zur nachfolgenden Messkammer 5 bildet. Die Form und Grösse der Messkammer 5 kann praktisch beliebig sein. Wird für Behälter 1, Druckbalg 3 und Messkammer 5 ein transparenter Kunststoff verwendet, so kann die Messkammer 5 problemlos mit einer entsprechenden Messskala 6 versehen sein, so dass die Dosiermenge entsprechend der Messskala beliebig eingestellt werden kann. Das untere Ende der Messkammer ist mittels einem Verschluss 9 verschliessbar. Der Verschluss 9 kann ein einfacher wie hier dargestellter Drehverschluss oder ein aufschraubbarer Schnappscharnierverschluss mit dichtbarer Ausgusstülle sein.

Der Druckbalg 3 wird in seiner axialen Länge von einem Ventilplattenhalter 8 durchsetzt. Der Ventilplattenhalter 8 ist hohlzylindrisch gestaltet und weist mindestens eine radial , nach aussen gerichtete Öffnung auf, so dass das Behältnis 1 und der Innenraum des Druckbalges 3 in ständiger kommunizierender Verbindung sind. Entsprechend ist vorteilhafterweise nicht nur eine durchgehende längliche, seitliche Öffnung 18 vorhanden, sondern das in den Behälter 1 hineinragende Ende ist vollständig offen gestaltet.

Der Ventilplattenhalter 8 ist form- und/oder kraftschlüssig im Übergangsbereich 30 vom Behälter 1 zum Druckbalg 3 gehalten. Dies kann beispielsweise durch Verkleben, Verschweissen oder eine andere herkömmliche Verbindungsart erfolgen oder wie hier in der Figur 1 dargestellt, weist der Ventilplattenhalter 8 eine umlaufenden Ringnut auf, in der der Übergangsbereich 30 vom Behälter 1 zum Druckbalg 3 formschlüssig durch die Elastizität des Materials auch kraftschlüssig gehalten ist. Der Kraftschluss kann zusätzlich begünstigt werden, weil der hohlzylindrische Ventilplattenhalter durch die Längsöffnungen 18 radial federnd gestaltet sein kann.

Das zur Austrittsöffnung der Messkammer hin gelegene Ende des Ventilplattenhalters 8 ist von einer Ventilplatte 7 abgeschlossen. Diese Ventilplatte 7 überragt den Durchmesser des Ventilplattenhalters 8 mindestens geringfügig. So verbleibt ein Kragen, der als Ventilsitz im Zusammenspiel mit der Einschnürung 31 zwischen Druckbalg 3 und Messkammer 5 wirkt. Diese Einschnürung 31 kann zusätzlich noch so gestaltet sein, dass sie eine gewisse Führung des Ventilplattenhalters 8 bewirkt. Der Druckbalg 3 ist so geformt, dass im montierten Zustand die Einschnürung 31 mit Druck auf den vorstehenden Kragen der Ventilplatte 7 aufliegt. Bei dieser Lösung wird durch ein Druck auf das Behältnis 1 der statische Druck im Druckbalg 3 erhöht, wodurch im Prinzip die Schliesskraft eher zunimmt. Hierdurch wird sichergestellt, dass nach der Dosierung nicht durch ungeschicktes Hantieren die Dosierung verändert wird.

In der Figur 2 ist rein schematisch in einem Teilschnitt die Umkehrung des Systems nach Figur 1 dargestellt. Zwar ist auch hier wiederum der Ventilplattenhalter 8 im Übergangsbereich 30 fest angeordnet, doch ist die Wirkungsweise insofern anders, als dass die Dosierung nicht durch Druck auf die Messkammer von unten zum Behälter hin erfolgt, sondern durch Zug in Richtung des Pfeiles B. Dies verlangt, dass der Druckbalg 3 so gestaltet ist, dass er im unbelasteten Zustand mit Zug zu schliessen vermag. Diese Lösung dürfte nur in ausgesprochenen Ausnahmefällen von Bedeutung sein.

In der Figur 4 ist wiederum eine Lösung gezeigt, bei welcher der Behälter 1, der Balg 3 und die Messkammer 5 aus einem Stück gefertigt sind. Allerdings ist hier die Messkammer 5 selber zweiteilig gestaltet. So weist die Messkammer 5 ein Aussengewinde 13 auf, auf dem eine Gewindehülse 14 aufschraubbar ist. Die Gewindehülse 14 wird annähernd vollständig durch eine bewegliche oder wie hier dargestellt feste Rohrhülse 15 durchsetzt. Der zylindrische Innenraum der Rohrhülse 15 bildet den Ausguss 17. Am Ende der Rohrhülse 15 ist ein Dichtring oder eine Dichtmanchette 16 angeordnet. Dieser Dichtring bzw. Dichtmanchette liegt dichtend an der Innenwand der Messkammer 5 an. Das äussere Ende der Rohrhülse 15 ist wiederum mittels eines Verschlusses 9 verschlossen. Durch In- oder Auseinanderschrauben der Messkammer und der darauf passenden, dichtenden Gewindehülse kann somit die Grosse der Mess- bzw. Dosierkammer verändert werden.

Ein wesentlicher Vorteil aller hier dargestellten Lösungen ist darin zu sehen, dass diese kunststofftechnisch relativ einfach und aus wenigen Teilen bestehend herstellbar sind Auch die eingangs erwähnten Probleme sind hierdurch gelöst.

## Patentansprüche

1. Dosier- und Messvorrichtung an einem festen oder deformierbaren Behälter mit Behälterhals, zur Dosierung und Abgabe einer variablen, messbaren Menge eines fliess-, riesel- oder schüttfähigen Mediums, wobei die Vorrichtung eine Messkammer aufweist, die zwischen Behälterhals und einer verschliessbaren Austrittsöffnung angeordnet ist, wobei in Ausfliessrichtung vor der Messkammer (5) ein längenveränderbarer Druckbalg angeordnet ist, der von einem Ventilplattenhalter (8) mit einer Ventilplatte (7) durchsetzt ist, **dadurch gekennzeichnet, dass** der Behälter (1), der Druckbalg (3) und die Messkammer (5) miteinander einstückig gefertigt sind und in einem Uebergangsbereich (30) zwischen dem Druckbalg (3) und dem Behälter (1) eine Einengung zur form- und/oder kraftschlüssigen unbeweglichen Halterung des Ventilplattenhalters (8) geformt ist, während eine Einschnürung (31) zwischen dem Druckbalg (3) und der Messkammer (5) den Ventilsitz der Ventilplatte (7) bildet.

2. Vorrichtung nach Patentanspruch 1, **dadurch gekennzeichnet, dass** die Einschnürung (31) zwischen der Messkammer (5) und dem Druckbalg (3) im montierten Zustand der Vorrichtung durch Vorspannung dichtend an der Ventilplatte (7) anliegt.

3. Vorrichtung nach Patentanspruch 2, **dadurch gekennzeichnet, dass** der Druckbalg (3) lediglich eine im montierten Zustand vorgespannte Balgfalte aufweist.

4. Vorrichtung nach Patentanspruch 1, **dadurch gekennzeichnet, dass** die Messkammer (5) durch einen Dreh- oder Schnappscharnierverschluss verschliessbar ist.

5. Vorrichtung nach Patentanspruch 1, **dadurch gekennzeichnet, dass** die Messkammer (5) zweiteilig grössenvariabel gestaltet ist, indem ein erster Teil eine mit Aussengewinde (13) versehene offene Messkammer (5) bildet, auf die eine passende Gewindehülse (14) als zweiter Teil axial verstellbar angeordnet ist, wobei die Gewindehülse (14) von einer zentrischen Rohrhülse (15) durchsetzt ist, auf der ein Dicht- oder Manschettenring (16) gehalten ist, der dichtend verschieblich entsprechend der Lage der Gewindehülse (14) in der offenen Messkammer (5) anliegt, wodurch deren Aufnahmevolumen variierbar ist.

6. Vorrichtung nach Patentanspruch 1, **dadurch gekennzeichnet, dass** der Ventilplattenhalter hohlzylindrisch gestaltet ist und mindestens eine radial nach aussen gerichtete Oeffnung (18) aufweist, so dass das Behältnis (1) und der Innenraum des Druckbalges (3) in ständiger kommunizierender Verbindung sind.

## Claims

1. A metering and measuring device on a rigid or deformable container with a container neck, for metering and dispensing a variable, measurable quantity of a medium capable of flowing, trickling or being poured, wherein the device comprises a measuring chamber which is arranged between the container neck and a closable exit opening, wherein in front of the measuring chamber (5) in the flow-out direction there is arranged a pressure bellows which is changeable in length and which is passed through by a valve plate holder (8) with a valve plate (7), **characterised in that** the container (1), the pressure bellows (3) and the measuring chamber (5) are manufactured as one piece with one another and in a transition region (30) between the pressure bellows (3) and the container (1) there is formed a narrowing for the immovable positive fit or nonpositive fit mounting of the valve plate holder (8), whilst a necking (31) between the pressure bellows (3) and the measuring chamber (5) forms the valve seat of the valve plate (7).

2. A device according to patent claim 1, **characterised in that** in the assembled condition of the device the necking (31) between the measuring chamber (5) and the pressure bellows (3) bears sealingly on the valve plate (7) by pretension.

3. A device according to patent claim 2, **characterised in that** the pressure bellows (3) only has one bellows fold pretensioned in the assembled conditon.

4. A device according to patent claim 1, **characterised in that** the measuring chamber (5) may be closed off by way of a rotary hinge closure or snap hinge closure.

5. A device according to patent claim 1, **characterised in that** the measuring chamber (5) is designed variable in size in two parts, **in that** a first part forms an open measuring chamber (5) provided with an outer thread (13) onto which there is axially adjustably arranged a fitting threaded sleeve (14) as a second part, wherein the threaded sleeve (14) is passed through by a centric tube sleeve (15) on which there is held a sealing ring or sleeve ring (15) which bears sealingly displaceable according to the position of the threaded sleeve (14) in the open measuring chamber (5), by which means its receiving volume is variable.

6. A device according to patent claim 1, **characterised in that** the valve plate holder is formed in a hollow-cylindrical manner and comprises at least one radially outwardly directed opening (18) so that the receptacle (1) and the inner space of the pressure belows (3) are in constant communicating connection.

## Revendications

1. Dispositif de dosage et de mesure sur un récipient solide ou déformable ayant un col de récipient, pour le dosage et la distribution d'une quantité mesurable, variable d'un milieu apte à couler, à s'écouler ou à être déversé, tandis que le dispositif présente une chambre de mesure, qui est disposée entre le col du récipient et un orifice de sortie obturable, tandis qu'avant la chambre de mesure (5) dans la direction d'écoulement est disposé un soufflet de pression pouvant changer de longueur, qui est traversé par une butée de plaque de soupape (8) muni d'une plaque de soupape (7), **caractérisé en ce que** le récipient (1), le soufflet de pression (3) et la chambre de mesure (5) sont faits d'une seule pièce, et dans une zone de transition (30) entre le soufflet de pression (3) et le récipient (1) est formé un rétrécissement pour le maintien immobile de la butée de plaque de soupape (8) par engagement positif et/ou par la force, tandis qu'un étranglement (31) entre le soufflet de pression (3) et la chambre de mesure (5) forme le siège de soupape de la plaque de soupape (7).

2. Dispositif selon la revendication 1, **caractérisé en ce que** l'étranglement (31) entre la chambre de mesure (5) et le soufflet de pression (3), dans le dispositif à l'état monté, est ajusté de manière étanche sur la plaque de soupape (7), par précontrainte.

3. Dispositif selon la revendication 2, **caractérisé en ce que** le soufflet de pression (3) présente un seul pli de soufflet, précontraint à l'état monté.

4. Dispositif selon la revendication 1, **caractérisé en ce que** la chambre de mesure (5) est apte à être obturée par une fermeture tournante ou à charnière à déclic.

5. Dispositif selon la revendication 1, **caractérisé en ce que** la chambre de mesure (5) est de taille variable et formée de deux parties, tandis qu'une première partie forme une chambre de mesure ouverte (5), munie d'un filetage extérieur (13), sur laquelle est placée avec ajustement axial une douille taraudée adaptée (14) formant une deuxième partie, tandis que la douille taraudée (14) est traversée par une gaine tubulaire centrée (15), sur laquelle est maintenue une bague d'étanchéité ou de garniture (16), qui est disposée dans la chambre de mesure ouverte (5) de manière à pouvoir être déplacée avec étanchéité en fonction de la position de la douille taraudée (14), ce qui permet de faire varier son volume de prélèvement.

6. Dispositif selon la revendication 1, **caractérisé en ce que** la butée de plaque de soupape a la forme d'un cylindre creux et présente au moins un orifice (18) dirigé radialement vers l'extérieur, de telle sorte que le récipient (1) et l'espace intérieur du soufflet de pression (3) sont constamment en liaison communicante.
